# EUROPEAN PATENT SPECIFICATION

(11) **EP 3 404 251 B1**
(45) Date of publication and mention of the grant of the patent: **11.03.2026**
(21) Application number: 17738211.6
(22) Date of filing: 13.01.2017
(51) Int. Cl.: F02N 11/08, F02P 5/15, F02P 3/045, F02P 9/00, F02B 63/02

(54) **PORTABLE GASOLINE TOOL AND ELECTRONIC IGNITION SYSTEM THEREOF**
TRAGBARES BENZIN WERKZEUG UND ELEKTRONISCHES ZÜNDSYSTEM DAFÜR
OUTIL PORTATIF À ESSENCE ET SON SYSTÈME D'ALLUMAGE ÉLECTRONIQUE

(30) Priority: 15.01.2016 CN 201610024698
(43) Date of publication of application: 21.11.2018
(73) Proprietor: Suzhou Cleva Precision Machinery & Technology Co., Ltd., Suzhou, Jiangsu 215000 (CN)
(72) Inventor: KONG, Zhao, Suzhou City Jiangsu 215000 (CN); CHEN, Fei, Suzhou City Jiangsu 215000 (CN)
(74) Representative: ABG Intellectual Property Law, S.L.
(86) International application number: PCT/CN2017/071178
(87) International publication number: WO 2017/121398

(56) References cited:
- EP-A1- 3 404 239
- EP-A2- 1 577 532
- EP-A2- 2 128 420
- EP-A2- 2 746 569
- EP-B1- 1 646 103
- CN-A- 101 126 356
- CN-A- 101 363 380
- CN-A- 103 758 671
- CN-A- 105 247 203
- CN-A- 105 464 875
- CN-A- 105 508 117
- CN-A- 105 545 562
- CN-A- 105 673 290
- CN-U- 202 047 923
- CN-U- 205 370 829
- CN-U- 205 638 760
- CN-U- 205 638 761
- CN-U- 205 638 762
- DE-A1- 102006 038 278
- GB-A- 2 418 636
- US-A1- 2005 005 914
- US-A1- 2006 042 574
- US-A1- 2009 194 726
- US-A1- 2010 070 121
- "KRAFTFAHRTECHNISCHES TASCHENBUCH BOSCH (22. Auflage)", 1 January 1995, DUESSELDORF : VDI-VERLAG., DE, ISBN: 978-3-18-419122-1, article HORST BAUER ET AL: "Kraftfahr Technisches Taschenbucch", pages: 436 - 437, XP055537525, 023205

## Description

### TECHNICAL FIELD

The present invention relates to a portable tool and an electronic ignition system thereof.

### BACKGROUND

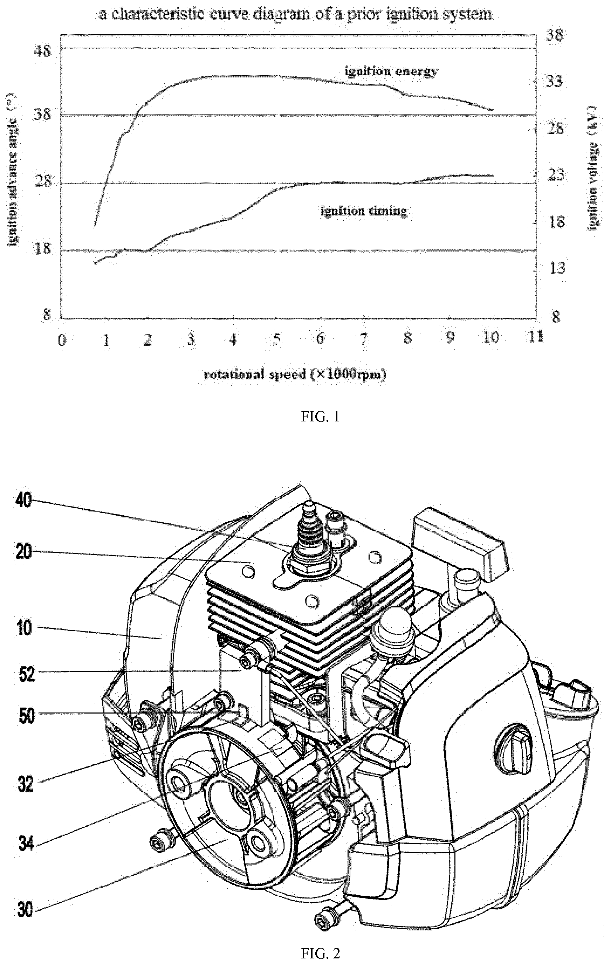

A portable gasoline tool is often used in the area of garden greening, and its electronic ignition system is a key system therein. The electronic ignition system mainly comprises a flywheel, a voltage boosting device, and a spark plug, and mainly functioning to ignite, with a spark produced by the spark plug driven by a high voltage coil, the combustible gas mixture introduced into the combustion chamber, to make it explode to release energy. In addition, the electronic ignition system operates at a most suitable ignition angle and gives out sufficient ignition voltage such that the gasoline engine of the portable gasoline tool can run smoothly and has an improved efficiency. Currently, the commonly used electronic ignition system comprises a magnet motor, an igniter, an inductive coil provided on the cylinder, and a permanent magnet mounted on the flywheel. The permanent magnet is rotated with the flywheel, and every time it meets the inductive coil fixed on the cylinder around a circle, an inductive current is produced in the inductive coil (as in an electric generator in principle). The higher the rotation speed of the flywheel is, the larger the inductive current is produced; the lower the rotation speed, the smaller the inductive current is. An electric circuit is used to amplify the coil inductive current into a voltage of tens of kV such that the spark plug connected thereto and placed in parallel in the combustion chamber of the gasoline engine, ignites. However, the electronic ignition system has the following defects: the voltage is proportional to the rotation speed, and when the rotation speed is relatively low, the produced inductive current is small and the ignition voltage is relatively low wherein the relation of the ignition time point, the ignition voltage and the rotation speed is shown in FIG. 1. Moreover, in the start-up stage, the rotation speed is relatively low, the ignition voltage cannot produce a large spark needed at this time and it is adverse to ignition, resulting in the difficulties to start the gasoline engine for the user to employ.

For the prior art, Patent application document US 2005005914A1 discloses a general-purpose engine generator, in which a backup battery is provided for the generator. The battery supplies electricity to an electronic controlled device such as a fuel pump for starting the engine. When the engine carries out a rating operation, electricity is supplied from the generator. When the engine speed is in a low speed range, only a pump is driven. When the engine speed is exceeds the low speed range, the pump is stopped, and an injectors are driven to be prevented from lapping over each other. When the engine speed reaches a high-speed range, the pump is again driven. Electricity consumption at a time of starting is restricted by driving the electronic controlled devices at different timings until the engine executes a self-sustaining.

Patent application document DE102006038278A1discloses a power tool having a drive unit arranged in a tool housing. The drive unit has an internal combustion engine with a cylinder provided with a combustion chamber. A spark plug is arranged at the cylinder. A piston is connected to a crankshaft and reciprocates within the cylinder and delimits the combustion chamber. A central control unit controls the drive unit and has a microprocessor and an ignition control unit, wherein the central control unit is connected by the ignition control unit to the spark plug and triggers a spark at the spark plug as a function of a rotary speed of the crankshaft at an appropriate ignition timing. A data storage device is connected to the central control unit. An energy supply unit provides electric energy. An interface enables, from outside the tool housing, external data access to data of the central control unit.

Patent application document GB2418636A discloses a combustion-powered, fastener-driving tool includes a cylinder and a combustion chamber disposed on top of the cylinder that accommodates a gaseous mixture of existing air in the combustion chamber and fuel injected therein. A spark plug generates a spark to combust the gaseous mixture in the combustion chamber. A trigger produces the spark in the spark plug when operated. A piston may be movably supported in the cylinder and driven by combustion in the combustion chamber. A driving blade may be coupled to the piston for driving a fastener such as a nail. A spark controller is provided for generating a plurality of sparks in succession with the spark plug. The number of sparks generated may be varied according to changes in a tool temperature detected by a temperature sensor. A combustion sensor may be provided so that the spark controller cancels the generation of sparks once combustion has occurred.

Patent application document EP1646103B1 discloses a battery mounted in a working machine in which a compact electric motor for starting a compact engine can be driven smoothly and safely for a long term, and the battery is reduced in size and weight to the utmost. Batteries are packaged as a battery pack. A lithium-based secondary battery includes two cell is incorporated in the battery pack. The entire discharge capacity of the cells is 500 to 2000 mAh, and discharge voltage per one cell is 3.0 to 4.2 V. Various electronic circuits a driving circuit and a battery protection circuit and a start switch relay circuit of an electric motor connected to the battery and incorporated in the battery pack are also incorporated in the battery pack. Maximum discharge current of the battery has high rate of 10 to 60 A. The protection circuit includes a special overdischarge inhibit circuit which is interposed at least in the electric motor driving circuit and which automatically stops the driving operation of the electric motor after time required for starting the engine elapsed. The volume of the battery pack is as extremely low as 2.5 × 10 4 to 1.0 × 10 5 mm 3. Since high current can flow, the time required until the engine is started from the actuation of the electric motor can be set to an interval as short as 5 to 15 seconds.

### SUMMARY

### Technical problem(s):

The technical problem to be solved by the present invention is to provide a portable tool with a gasoline engine and provide an electronic ignition system thereof wherein the operation is simple and convenient, it can be started even if the rotation speed is relatively low in the start-up stage, enabling an enhanced user experience and facilitating popularization and promotion of the product.

### Solutions to the problem(s):

### Technical solutions:

The first technical solution of the present invention is: An electronic ignition system for a portable tool with a gasoline engine, which comprises a body, a cylinder provided in the body, a piston moveable to and from within the cylinder, a crankshaft driving the piston to move, a flywheel provided on the body and driven by the crankshaft to rotate; the electronic ignition system comprising:
a voltage boosting device;
a spark plug connected with an output of the voltage boosting device;
a DC power source connected with the voltage boosting device;
at least one sensing element provided on one of the body and the flywheel;
at least one position sensor, provided on the other one of the body and the flywheel to obtain a rotation speed of the flywheel through the at least one sensing element;
a temperature sensor, obtaining an ambient temperature; and
a single controller, electrically connected with the DC power source, the voltage boosting device, the at least one position sensor and the temperature sensor, wherein the controller calculates an ignition voltage and an ignition advance angle according to working time, the rotation speed of the flywheel and the ambient temperature and controls the voltage boosting device accordingly;
wherein the DC power is configured as a power source providing electric energy to the single controller and to the voltage boosting device;
wherein the DC power source is a lithium battery, the voltage boosting device comprises a plurality of stages of voltage boosting units; an output voltage of the lithium battery is boosted to the ignition voltage through the plurality of stages of voltage boosting units;
wherein the voltage boosting device comprises a first-stage voltage boosting unit and a second-stage voltage boosting unit, the first-stage voltage boosting unit boosts a voltage from the output voltage of the lithium battery to 200 V~250 V, and the second-stage voltage boosting unit further boosts the voltage from 200 V~250 V to the ignition voltage.

Based on the first technical solution, the following dependent technical solutions are further included:
The voltage boosting device boosts an output voltage of the DC power source to an ignition voltage; the output voltage of the DC power source is 6 V~12 V, and the ignition voltage is 10 kV~30 kV.

The ignition voltage is 15 kV~30 kV.

The sensing element is provided on the flywheel and it is a magnet, with its number being at least one; the position sensor is provided on the body, with its number being one.

The sensing element is provided on the flywheel and it is Fe, with its number being at least one; the position sensor is provided on the body, with its number being one, wherein the position sensor is an approach switch.

The DC power source is a Li battery; the controller is an MCU controller.

The DC power source is removable and rechargeable.

The voltage boosting device comprises an ignition coil.

The second technical solution of the present invention is: a portable tool with a gasoline engine, comprising a body, a cylinder provided in the body, a piston movable to and fro in the cylinder, a crankshaft co-moved with the piston, a flywheel provided on the body and driven by the crankshaft to rotate, and the electronic ignition system described above.

### Beneficial effect(s) of the present invention:

### Beneficial effect(s):

In the present invention, the controller with an MCU design can precisely control the ignition angle and energy. When the load of the gasoline engine changes rapidly, the controller can, with the change in rotation speed as detected by the position sensor, adjust the ignition angle at the appropriate time, thus making the gasoline engine work more stably. In addition, the operation is simple and convenient, and it can be started even if the rotation speed is relatively low in the start-up stage, thus enabling an enhanced user experience and facilitating popularization and promotion of the product.

### BRIEF DESCRIPTION OF DRAWINGS

FIG. 1 is a characteristic graph of a traditional ignition system;
FIG. 2 is a perspective structure diagram of the present invention, with a portion of the housing removed;
FIG. 3 is a section view of FIG. 1;
FIG. 4 is an electric circuit function block diagram of the present invention;
FIG. 5 is a characteristic graph of an ignition system of the present invention;
FIG. 6 is an electric circuit diagram of a controller of the present invention;
FIG. 7 is an electric circuit diagram of a power source module of the present invention;
FIG. 8 is an electric circuit diagram of a high voltage ignition mechanism of the present invention;
FIG. 9 is an electric circuit diagram of a damper and throttle controlling mechanism of the present invention; and
FIG. 10 is an electric circuit diagram of an electrically-starting controlling mechanism of the present invention.

### DETAILED DESCRIPTION

Embodiment(s): as shown in FIGs. 2-3, in the present invention, a first embodiment of an electronic ignition system for a portable gasoline tool is provided, comprising: a voltage boosting device and a spark plug 40 connected with an output of the voltage boosting device. The electronic ignition system for the portable gasoline tool further comprises a DC (Direct Current) power source 70 and a controller electrically connected with the DC power source 70 and connected with the voltage boosting device. The DC power source 70 is preferably a Li battery, more preferably a removable rechargeable lithium battery. The controller is a Micro Control Unit (MCU) controller, wherein the controller controls ignition voltage and an ignition advance angle.

As shown in FIGs. 2-3 for reference, in the present invention, a second embodiment of an electronic ignition system for a portable gasoline tool is provided wherein the portable gasoline tool comprises: a body 10, and a flywheel 30 provided on the body 10 and drawn manually or electrically. The electronic ignition system for the portable gasoline tool comprises a voltage boosting device and a spark plug 40 connected with an output of the voltage boosting device. The electronic ignition system for the portable gasoline tool further comprises: a sensing element provided on the flywheel 30 or the body 10, and a position sensor 50 provided on the body 10 or the flywheel 30 to obtain a rotation speed of the flywheel 30 through the sensing element, and a controller electrically connected with the position sensor 50 and connected with the voltage boosting device, wherein the controller controls ignition voltage and an ignition advance angle. In the present embodiment, the sensing element is provided on the flywheel 30 and it is a magnet, with its number being at least two; and the position sensor 50 is provided on the body 10, with its number being one. The position sensor 50 is preferably a Hall element, or may be a photoelectric element or other elements.

Preferably, the sensing element comprises a positioning magnet 32 for initial positioning, and a measuring magnet 34 for rotation speed measurement, wherein the positioning magnet 32 is also referred as the top dead point positioning magnet.

Preferably, the present embodiment further comprises a Printed Circuit Board (PCB) 52 provided on the body 10 and electrically connected and fixed with the position sensor 50. The sensing element is provided in a circumferential direction of the flywheel 30, and the PCB 52 is located at a side of the flywheel 30 and is kept spaced from the flywheel 30.

Preferably, the sensing element is a magnet, with its number being one, and at least two position sensors are provided.

Preferably, the present embodiment further comprises a DC power source 70 providing electric energy to the controller. The DC power source 70 is preferably a Li battery, more preferably a removable lithium battery.

Preferably, the voltage boosting device boosts an output voltage of the Li battery to an ignition voltage, thus providing sufficient energy to ignite the fuel-gas mixture. The output voltage of the Li battery is 6 V~12 V, and the ignition voltage is 10 kV~30 kV. Preferably, the voltage boosting device comprises a plurality of stages of voltage boosting units. In the present embodiment, the voltage boosting device comprises a first-stage voltage boosting unit and a second-stage voltage boosting unit, the first-stage voltage boosting unit boosts the voltage from the output voltage of the lithium battery to 200 V~250 V, and the second-stage voltage boosting unit further boosts the voltage from 220 V~250 V to the ignition voltage. Specifically in the present embodiment, the output voltage of the lithium battery is 6 V or 7.2 V. The voltage boosting device 241 first boosts the output voltage of the lithium battery to 220 V by a series induction manner, and then boosts the 220 V voltage to the ignition voltage wherein the ignition voltage is 15 kV~30 kV.

Preferable, the voltage boosting device comprises an ignition coil.

As shown in FIGs. 2-3 for reference, in the present invention, a third embodiment of a portable gasoline tool is provided, comprising: a body 10, a cylinder 20 provided in the body 10, a piston 60 movable to and fro within the cylinder 20, a crankshaft 62 driving the piston 60 to move, a flywheel 30 provided on the body 10 and driven by the crankshaft 62 to rotate, and an electronic ignition system which comprises a voltage boosting device and a spark plug 40 connected with an output of the voltage boosting device and provided on the cylinder 20. The electronic ignition system further comprises: a sensing element provided on the flywheel 30 or the body 10, a position sensor 50 provided on the body 10 or the flywheel 30 to obtain a rotation speed of the flywheel through the sensing element, and a controller electrically connected with the position sensor 50 and connected with the voltage boosting device. Wherein, the sensing element is preferably provided on the flywheel 30 and it is a magnet, with its number being at least two; and the position sensor 50 is provided on the body 10, with its number being one. The position sensor 50 is preferably a Hall element, or may be a photoelectric element or other elements. The cylinder 20 is provided therein with a combustion chamber 22, wherein the spark plug 40 is fixed on the cylinder 20 and is at least partially extended into the combustion chamber 22.

Preferably, the sensing element comprises a positioning magnet 32 for initial positioning, and a measuring magnet 34 for rotation speed measurement, wherein the positioning magnet 32 is also referred as the top dead point positioning magnet.

Preferably, the present embodiment further comprises a PCB 52 provided on the body 10 and electrically connected and fixed with the position sensor 50. The sensing element is provided in a circumferential direction of the flywheel 30, and the PCB 52 is located at a side of the flywheel 30 and is kept spaced from the flywheel 30.

Preferably, the sensing element is a magnet, with its number being one, and at least two position sensors are provided. The position sensor 50 is preferably a Hall element, or may be a photoelectric element or other elements.

Preferably, the present embodiment further comprises a DC power source 70 providing electric energy to the controller, and a temperature sensor connected with the controller.

As shown in FIGs. 2-3 for reference, in the present invention, a fourth embodiment of an electronic ignition system for a portable gasoline tool is provided, comprising: a voltage boosting device and a spark plug 40 connected with an output of the voltage boosting device. The electronic ignition system for the portable gasoline tool further comprises: a DC power source 70, and a controller electrically connected with the DC power source 70 and connected with the voltage boosting device, and a temperature sensor connected with the controller. The DC power source 70 is preferably a Li battery, more preferably a removable lithium battery.

As shown in FIGs. 2-3 for reference, in the present invention, a fifth embodiment of an electronic ignition system for a portable gasoline tool is provided wherein the portable gasoline tool comprises: a body 10, and a flywheel 30 provided on the body 10 and drawn manually or electrically. The electronic ignition system for the portable gasoline tool comprises a voltage boosting device and a spark plug 40 connected with an output of the voltage boosting device. The electronic ignition system for the portable gasoline tool further comprises: a sensing element provided on the flywheel 30 or the body 10, a position sensor 50 provided on the body 10 or the flywheel 30 to obtain a rotation speed of the flywheel through the sensing element, a controller electrically connected with the position sensor 50 and connected with the voltage boosting device, a DC power source 70 providing electric energy to the controller, and a temperature sensor connected with the controller. The position sensor 50 is preferably a Hall element, or may be a photoelectric element or other elements. The DC power source 70 is preferably a Li battery, more preferably a removable rechargeable lithium battery.

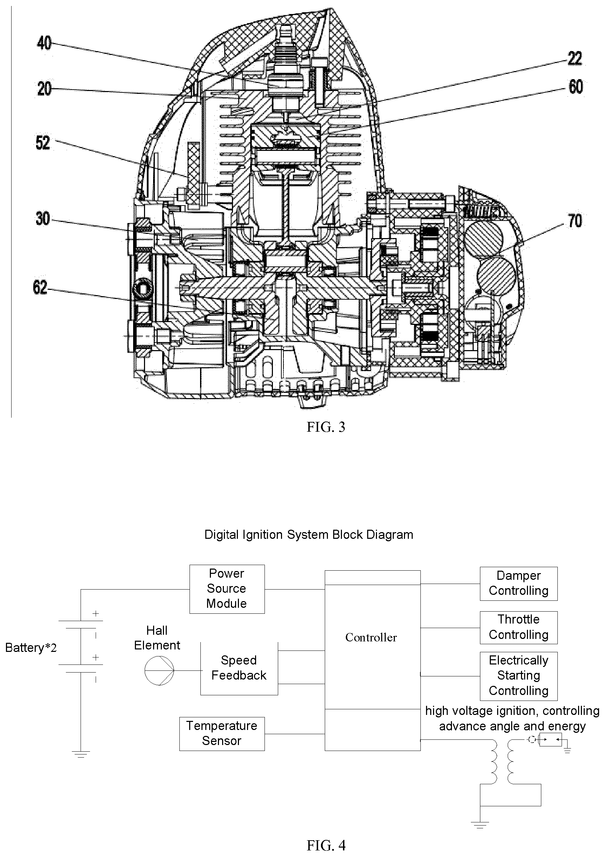

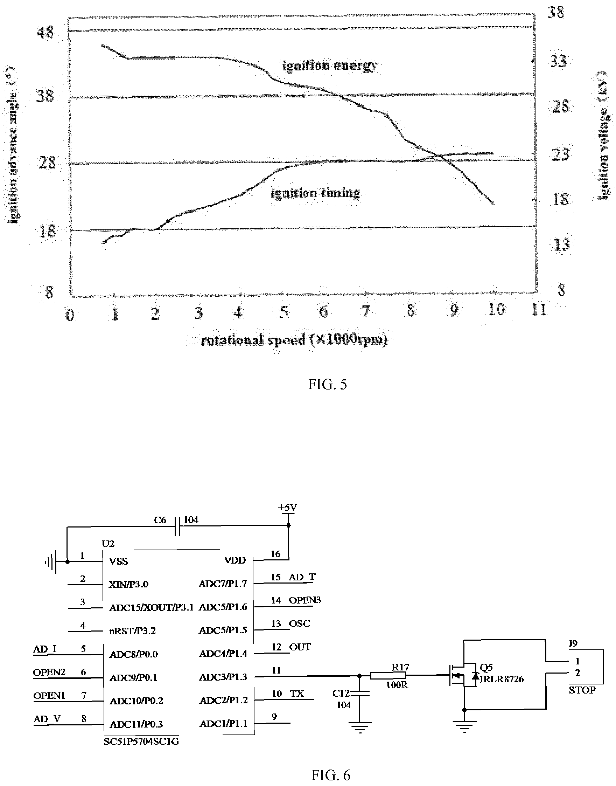

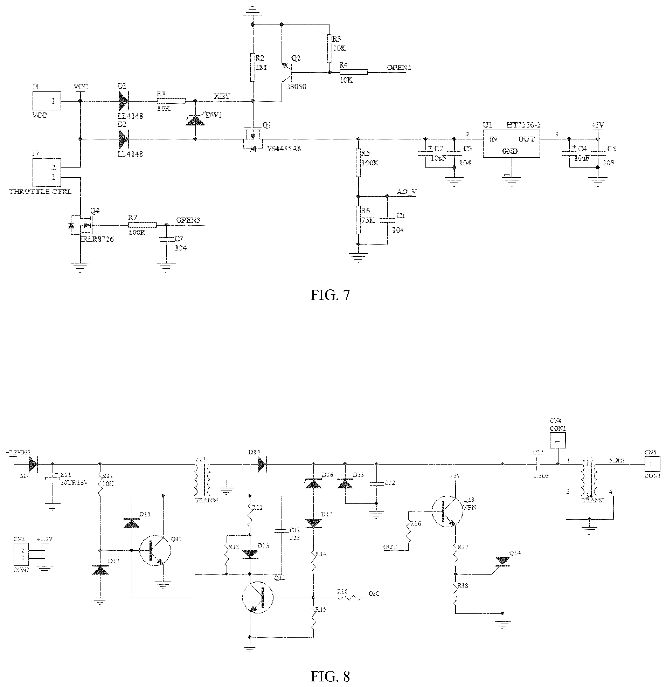

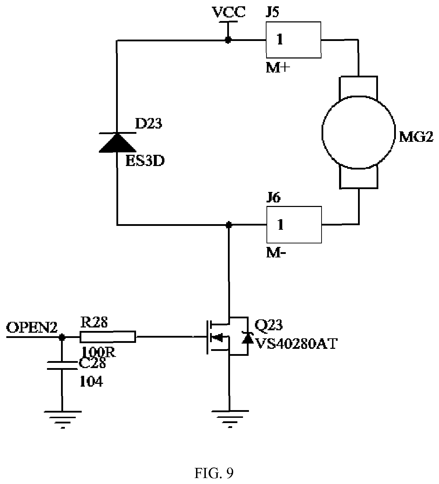

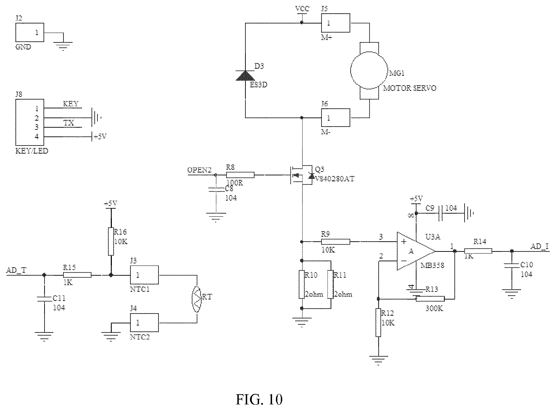

As shown in FIG. 4 for reference, an electric circuit function block diagram of the present invention is provided, and in structure it comprises: a Li battery with its negative electrode connected to the ground, a power source module for voltage reduction connected with a positive electrode of the Li battery, a controller connected with the power source module, a damper controlling mechanism connected with the controller, a throttle controlling mechanism connected with the controller, an electrically-starting controlling mechanism connected with the controller, a high voltage ignition mechanism connected with the controller, a speed feedback mechanism connected with the controller and with a Hall element, and a temperature sensor connected with the controller, wherein the controller is provided therein with a main chip circuit and its electric circuit structure is specifically detailed in FIG. 6, the inside electric circuit of the power source module is specifically detailed in FIG. 7, the electric circuit structure of the high voltage ignition mechanism is specifically detailed in FIG. 8, the electric circuit structure of the damper and throttle controlling mechanism is specifically detailed in FIG. 9, and the electric circuit structure of the electrically-starting controlling mechanism is specifically detailed in FIG. 10. The high voltage ignition mechanism comprises a voltage boosting device, a spark plug, and other element(s).

In summary of the above embodiments, in the present invention, the Li battery is used as the DC power source, the position sensor is used to detect the rotation speed of the flywheel to determine the ignition angle, the temperature sensor is used to detect the current temperature, the controller converts the DC power source from a low voltage to a high voltage via the voltage boosting device. The controller, according to various working conditions including the current rotation speed, working time, temperature, etc., calculates the currently necessary ignition angle and ignition voltage, then the electronic ignition system, with the angle calculated by the controller itself, uses a high voltage pack to release an electric spark with corresponding energy such that the fuel-gas mixture in the cylinder combusts, pushing the piston to move to and from so that the gasoline engine is in an ideal working state. Therefore, ignition can be achieved at a very low rotation speed. The temperature sensor is used to detect the current temperature and when the temperature is relatively low, the ignition voltage should be increased. Also, the controller can control the ignition angle and energy such that the ignition occurs when the concentration in the cylinder is the highest, producing the largest spark, so that it is relatively easy to start the gasoline engine, easier to operate and higher in efficiency. Compared with the prior technical solution of magnet motor, in the present invention, it is not necessary to install bulky magnet modules on the blades of the flywheel, and thus the weight of the blades can be reduced, so that the power (from the gasoline engine) consumed by the blades is relatively small and the whole efficiency of the system can be improved. Also, by speed detection, the ignition angles at different speeds can be controlled to be in the ideal state, thus improving the working efficiency of the gasoline engine system in any speed state. Moreover, the controller with an MCU design can precisely control the ignition angle and energy. When the load of the gasoline engine changes rapidly, the controller can, with the flywheel position detected by the position sensor and the flywheel rotation speed and with controlling of the program algorithms, adjust the ignition angle at the appropriate time. Thus a relation of the ignition time point, the ignition voltage and the rotation speed as obtained is shown in FIG. 5, thus making the gasoline engine work more stably.

Certainly, the above embodiments are provided only to explain the technical concepts and features of the present invention, with the purpose for enabling those skilled in the art to implement the present invention by understanding the contents thereof, rather than limiting the protection scope of the present invention thereto.

## Claims

1. An electronic ignition system for a portable tool with a gasoline engine, which comprises a body (10), a cylinder (20) provided in the body (10), a piston (60) moveable to and from within the cylinder (20), a crankshaft (62) driving the piston (60) to move, a flywheel (30) provided on the body (10) and driven by the crankshaft (62) to rotate; the electronic ignition system comprising:
a voltage boosting device;
a spark plug (40) connected with an output of the voltage boosting device;
a DC power source (70) connected with the voltage boosting device;
at least one sensing element provided on one of the body (10) and the flywheel (30);
at least one position sensor (50), provided on the other one of the body (10) and the flywheel (30) to obtain a rotation speed of the flywheel (30) through the at least one sensing element;
a temperature sensor, obtaining an ambient temperature; and
a single controller, electrically connected with the DC power source (70), the voltage boosting device, the at least one position sensor (50) and the temperature sensor, wherein the controller calculates an ignition voltage and an ignition advance angle according to working time, the rotation speed of the flywheel (30) and the ambient temperature and controls the voltage boosting device accordingly;
wherein the DC power (70) is configured as a power source providing electric energy to the single controller and to the voltage boosting device;
wherein the DC power source (70) is a lithium battery, the voltage boosting device comprises a plurality of stages of voltage boosting units; an output voltage of the lithium battery is boosted to the ignition voltage through the plurality of stages of voltage boosting units;
wherein the voltage boosting device comprises a first-stage voltage boosting unit and a second-stage voltage boosting unit, the first-stage voltage boosting unit boosts a voltage from the output voltage of the lithium battery to 200 V~250 V, and the second-stage voltage boosting unit further boosts the voltage from 200 V~250 V to the ignition voltage.

2. The electronic ignition system according to claim 1, wherein the voltage boosting device boosts an output voltage of the DC power source (70) to an ignition voltage; the output voltage of the DC power source (70) is 6 V~12 V, and the ignition voltage is 10 kV~30 kV.

3. The electronic ignition system according to claim 2, wherein the ignition voltage is 15 kV~30 kV.

4. The electronic ignition system according to any one of claims 1-3, wherein the at least one sensing element is provided on the flywheel (30) and is a magnet, and the number of the at least one sensing element is at least two.

5. The electronic ignition system according to claim 4, wherein the at least one sensing element comprises a positioning magnet (32) for initial positioning, and a measuring magnet (34) for rotation speed measurement.

6. The electronic ignition system according to any one of claims 1-3, wherein the at least one position sensor (50) is provided on the body (10), and the number of the at least one position sensor (50) is one.

7. The electronic ignition system according to any one of claims 1-6, further comprising a printed circuit board (PCB, 52), provided on the body (10) and electrically connected and fixed with the at least one position sensor (50).

8. The electronic ignition system according to claim 7, wherein the at least one sensing element is provided in a circumferential direction of the flywheel (30), and the PCB (52) is located at a side of the flywheel (30) and is kept spaced from the flywheel (30).

9. The electronic ignition system according to claim 1, wherein the second-stage voltage boosting unit is an ignition coil.

10. The electronic ignition system according to any one of claims 1-9, wherein the DC power source (70) is a removable rechargeable Li battery; the controller is an MCU controller.

11. A portable tool with a gasoline engine, comprising the electronic ignition system according to any one of claims 1-10.

## Patentansprüche

1. Elektronisches Zündsystem für ein tragbares Gerät mit einem Verbrennungsmotor, umfassend einen Körper (10), einen im Körper (10) bereitgestellten Zylinder (20), einen im Zylinder (20) hin und her beweglichen Kolben (60), eine Kurbelwelle (62), die den Kolben (60) antreibt sich zu bewegen, ein Schwungrad (30), das am Körper (10) bereitgestellt ist und von der Kurbelwelle (62) angetrieben wird, zu rotieren; wobei das elektronische Zündsystem umfasst:
eine Spannungserhöhungsvorrichtung;
eine Zündkerze (40), die mit einem Ausgang der Spannungserhöhungsvorrichtung verbunden ist;
eine DC-Stromquelle (70), die mit der Spannungserhöhungsvorrichtung verbunden ist;
mindestens ein Sensorelement, das an einem, dem Körper (10) oder dem Schwungrad (30), bereitgestellt ist;
mindestens einen Positionssensor (50), der an dem anderen, dem Körper (10) oder dem Schwungrad (30), bereitgestellt ist, um eine Drehzahl des Schwungrads (30), über das mindestens eine Sensorelement zu erhalten;
einen Temperatursensor, der eine Umgebungstemperatur erhält; und
eine einzelne Steuerung, die elektrisch verbunden ist mit der DC-Stromquelle (70), der Spannungserhöhungsvorrichtung, dem mindestens einen Positionssensor (50) und dem Temperatursensor, wobei die Steuerung eine Zündspannung und einen Zündvorwinkel entsprechend der Arbeitszeit, der Drehzahl des Schwungrads (30) und der Umgebungstemperatur berechnet und die Spannungserhöhungsvorrichtung entsprechend steuert;
wobei die DC-Stromquelle (70) als eine Stromquelle konfiguriert ist, die elektrische Energie an die einzelne Steuerung und an die Spannungserhöhungsvorrichtung bereitstellt;
wobei die DC-Stromquelle (70) eine Lithiumbatterie ist, die Spannungserhöhungsvorrichtung eine Mehrzahl von Stufen von Spannungserhöhungseinheiten umfasst; eine Ausgangsspannung der Lithiumbatterie durch die Mehrzahl von Stufen von Spannungserhöhungseinheiten auf die Zündspannung erhöht wird;
wobei die Spannungserhöhungsvorrichtung eine Spannungserhöhungseinheit der ersten Stufe und eine Spannungserhöhungseinheit der zweiten Stufe umfasst, wobei die Spannungserhöhungseinheit der ersten Stufe eine Spannung von der Ausgangsspannung der Lithiumbatterie auf 200 V - 250 V erhöht und die Spannungserhöhungseinheit der zweiten Stufe ferner die Spannung von 200 V - 250 V auf die Zündspannung erhöht.

2. Elektronisches Zündsystem nach Anspruch 1, wobei die Spannungserhöhungsvorrichtung eine Ausgangsspannung der DC-Stromquelle (70) auf eine Zündspannung erhöht; die Ausgangsspannung der DC-Stromquelle (70) 6 V - 12 V beträgt und die Zündspannung 10 kV - 30 kV beträgt.

3. Elektronisches Zündsystem nach Anspruch 2, wobei die Zündspannung 15 kV - 30 kV beträgt.

4. Elektronisches Zündsystem nach einem der Ansprüche 1 bis 3, wobei das mindestens eine Sensorelement an dem Schwungrad (30) bereitgestellt ist und ein Magnet ist und die Anzahl des mindestens einen Sensorelements mindestens zwei beträgt.

5. Elektronisches Zündsystem nach Anspruch 4, wobei das mindestens eine Sensorelement einen Positionierungsmagneten (32) zur anfänglichen Positionierung und einen Messmagneten (34) zur Drehzahlmessung umfasst.

6. Elektronisches Zündsystem nach einem der Ansprüche 1 bis 3, wobei der mindestens eine Positionssensor (50) an dem Gehäuse (10) bereitgestellt ist und die Anzahl des mindestens einen Positionssensors (50) eins beträgt.

7. Elektronisches Zündsystem nach einem der Ansprüche 1 bis 6, ferner umfassend, eine Leiterplatte (PCB, 52), die an dem Gehäuse (10) bereitgestellt ist und elektrisch verbunden und fixiert mit dem mindestens einen Positionssensor (50) ist.

8. Elektronisches Zündsystem nach Anspruch 7, wobei das mindestens eine Sensorelement in Umfangsrichtung des Schwungrads (30) bereitgestellt ist und die PCB (52) an einer Seite des Schwungrads (30) lokalisiert ist und in Distanz zum Schwungrad (30) gehalten wird.

9. Elektronisches Zündsystem nach Anspruch 1, wobei die Spannungserhöhungseinheit der zweiten Stufe eine Zündspule ist.

10. Elektronisches Zündsystem nach einem der Ansprüche 1 bis 9, wobei die DC-Stromquelle (70) eine entfernbare wiederaufladbare Li-Batterie ist; die Steuerung eine MCU-Steuerung ist.

11. Tragbares Gerät mit einem Verbrennungsmotor, umfassend das elektronische Zündsystem nach einem der Ansprüche 1 bis 10.

## Revendications

1. Système d'allumage électronique pour un outil portatif équipé d'un moteur à essence, qui comprend un corps (10), un cylindre (20) agencé dans le corps (10), un piston (60) mobile en va-et-vient à l'intérieur du cylindre (20), un vilebrequin (62) entraînant le piston (60) pour le mettre en mouvement, un volant d'inertie (30) agencé sur le corps (10) et entraîné en rotation par le vilebrequin (62), le système d'allumage électronique comprenant :
un dispositif élévateur de tension,
une bougie d'allumage (40) reliée à une sortie du dispositif élévateur de tension,
une source d'alimentation en courant continu (70) reliée au dispositif élévateur de tension,
au moins un élément de détection agencé sur un élément parmi le corps (10) et le volant d'inertie (30),
au moins un capteur de position (50), agencé sur l'autre élément parmi le corps (10) et le volant d'inertie (30), pour obtenir une vitesse de rotation du volant d'inertie (30) par l'intermédiaire du au moins un élément de détection,
un capteur de température, obtenant une température ambiante, et
une commande unique, électriquement reliée à la source d'alimentation en courant continu (70), au dispositif élévateur de tension, au moins un capteur de position (50) et au capteur de température, dans lequel la commande calcule une tension d'allumage et un angle d'avance à l'allumage en fonction d'un temps de fonctionnement, de la vitesse de rotation du volant d'inertie (30) et de la température ambiante, et commande le dispositif élévateur de tension en conséquence,
dans lequel la source d'alimentation en courant continu (70) est configurée comme une source d'alimentation fournissant de l'énergie électrique à la commande unique et au dispositif élévateur de tension,
dans lequel la source d'alimentation en courant continu (70) est une batterie au lithium, le dispositif élévateur de tension comprend une pluralité d'étages d'unités élévatrices de tension, une tension de sortie de la batterie au lithium est augmentée jusqu'à la tension d'allumage par l'intermédiaire de la pluralité d'étages d'unités élévatrices de tension,
dans lequel le dispositif élévateur de tension comprend une unité élévatrice de tension de premier étage et une unité élévatrice de tension de second étage, l'unité élévatrice de tension de premier étage augmente une tension à partir de la tension de sortie de la batterie au lithium jusqu'à 200 V-250 V, et l'unité élévatrice de tension de second étage augmente encore la tension à partir de 200 V-250 V jusqu'à la tension d'allumage.

2. Système d'allumage électronique selon la revendication 1, dans lequel le dispositif élévateur de tension augmente une tension de sortie de la source d'alimentation en courant continu (70) jusqu'à une tension d'allumage, la tension de sortie de la source d'alimentation en courant continu (70) est de 6 V ~ 12 V, et la tension d'allumage est de 10 kV ~ 30 kV.

3. Système d'allumage électronique selon la revendication 2, dans lequel la tension d'allumage est de 15 kV ~ 30 kV.

4. Système d'allumage électronique selon l'une quelconque des revendications 1 à 3, dans lequel le au moins un élément de détection est agencé sur le volant d'inertie (30) et est un aimant, et le nombre des au moins un élément de détection est d'au moins deux.

5. Système d'allumage électronique selon la revendication 4, dans lequel le au moins un élément de détection comprend un aimant de positionnement (32) pour un positionnement initial, et un aimant de mesure (34) pour une mesure de vitesse de rotation.

6. Système d'allumage électronique selon l'une quelconque des revendications 1 à 3, dans lequel le au moins un capteur de position (50) est agencé sur le corps (10), et le nombre des au moins un capteur de position (50) est un.

7. Système d'allumage électronique selon l'une quelconque des revendications 1 à 6, comprenant en outre une carte à circuit imprimé (PCB, 52), agencée sur le corps (10) et électriquement reliée au moins un capteur de position (50) et est fixée à celui-ci.

8. Système d'allumage électronique selon la revendication 7, dans lequel le au moins un élément de détection est agencé dans une direction circonférentielle du volant d'inertie (30), et la PCB (52) est située sur un côté du volant d'inertie (30) et est maintenue espacée du volant d'inertie (30).

9. Système d'allumage électronique selon la revendication 1, dans lequel l'unité élévatrice de tension de second étage est une bobine d'allumage.

10. Système d'allumage électronique selon l'une quelconque des revendications 1 à 9, dans lequel la source d'alimentation en courant continu (70) est une batterie Li rechargeable amovible, la commande étant une commande de MCU.

11. Outil portatif équipé d'un moteur à essence, comprenant le système d'allumage électronique selon l'une quelconque des revendications 1 à 10.
